# EUROPEAN PATENT APPLICATION

(11) **EP 2 876 756 A1**
(43) Date of publication of application: **27.05.2015**
(21) Application number: 13193847.4
(22) Date of filing: 21.11.2013
(51) Int. Cl.: H02B 13/035, H01R 13/53

(54) **Connector assembly**

(71) Applicant: Tyco Electronics Raychem GmbH, 85521 Ottobrunn (DE)
(72) Inventor: Simonsohn, Thilo, 81735 München (DE); Heindl, Christian, 80807 München (DE); Hardi, Markus, 85579 Neubiberg (DE); Friedrich, Torsten, 81379 München (DE); Lederle, Christoph, 81539 München (DE)
(74) Representative: Patentanwaltskanzlei WILHELM & BECK

(57) **Abstract**

A connector assembly comprises a busbar and a plurality of domes. The busbar comprises a plurality of first interface sections. Each dome comprises a pole portion and a cable connection portion. The pole portion of each dome comprises a second interface section. The second interface section of each dome can be connected to a first interface section of the busbar.

## Description

The present invention relates to a connector assembly according to claim 1.

For connecting cables to electrical equipment such as switch-gears and transformers, elbows and bushings are commonly used in the state of the art. Such elbows and bushings may for example be used in medium voltage applications with voltages between 1 kV and 72 kV. Such connections may have to be installed in the underground, in tunnels, in cabinets or on poles. The cables may be oriented in different directions and they may comprise different sizes and types of insulation and shielding. The cables may be designed for different voltage classes like 12 kV, 24 kV, 36 kV or 42 kV or for voltage classes below 1 kV or above 42 kV. This variability of boundary conditions necessitates a great variety of connectors with differently molded parts.

It is an object of the present invention to provide a connector assembly. This objective is achieved by a connector assembly according to claim 1. Preferred embodiments are disclosed in the dependent claims.

A connector assembly according to the invention comprises a busbar and a plurality of domes. The busbar comprises a plurality of first interface sections. Each dome comprises a pole portion and a cable connection portion. The pole portion of each dome comprises a second interface section. The second interface section of each dome can be connected to one first interface section of the busbar. Advantageously, the busbar and the dome of this connector assembly are modularized, allowing to combine individually adapted domes and individually adapted busbars with each other. Advantageously, this reduces the number of variants of the connector assembly that are necessary to cover different boundary conditions of different fields of use of the connector assembly. The domes of the connector assembly may for example be adapted to different cable sizes and different voltage classes. A further advantage of the connector assembly is that the domes may be connected to the busbar in different orientations. This allows a simple adaptation of the connector assembly to different given structural conditions. Different designs of busbars further increase the number of options to easily adapt to different structural conditions.

In an embodiment of the connector assembly, the cable connection portion of each dome comprises a cable terminal designed for being connected to a cable. The busbar comprises a conductor. Each dome comprises an element provided to electrically connect the cable terminal of said dome to the conductor. Each dome thus allows to electrically connect a cable connected to the cable terminal of said dome to the conductor of the busbar.

In an embodiment of the connector assembly, the element of each dome is a plug that can be arranged in the pole portion of said dome to electrically connect the cable terminal of said dome with the conductor. The electrical connection between said cable and the busbar can thus advantageously be established and interrupted using the plug of said dome without any movement of the cable or the busbar or the dome.

In an embodiment of the connector assembly, the cable terminal of a first dome of the connector assembly and the cable terminal of a second dome of the connector assembly are designed for being connected to cables of the same or a different construction. Advantageously the connector assembly then allows to connect cables of different cable constructions. Different cable constructions may for example involve different diameters, different cross sections, different shieldings, different armors and different cable jackets. Cables of different constrcutions may be suited for different voltage classes.

In an embodiment of the connector assembly, the second interface sections of at least two of the domes can be connected to first interface sections of the busbar such that the pole portions of said domes are arranged in parallel to each other. Advantageously, this arrangement of the pole portions of the domes of the connector assembly allows to feed cables that are to be connected to the cable connection portions of the domes in parallel towards the connector assembly. This allows for a space-saving arrangement.

In an embodiment of the connector assembly, the second interface section of at least one of the domes can be connected to a first interface section of the busbar such that the pole portion of said dome is arranged perpendicular to a longitudinal axis of the busbar. Advantageously, the dome occupies only a small amount of space on the surface of the busbar in this arrangement. This allows to design the busbar in a compact manner.

In an embodiment of the connector assembly, the pole portion and the cable connection portion of at least one of the domes are arranged perpendicular to each other. Advantageously this allows to feed cables that are to be connected to the cable connection portions of said domes towards the connector assembly in a direction perpendicular to the pole portions of said domes.

In an embodiment of the connector assembly, the second interface sections of at least two of the domes can be connected to first interface sections of the busbar such that the cable connection portions of said domes are arranged in parallel to each other. Advantageously this allows for a space-saving arrangement of the cable connection portions of said domes of the connector assembly. Furthermore this also allows to feed cables towards the connector assembly in parallel to each other.

In an embodiment of the connector assembly, the second interface sections of at least two of the domes can be connected to first interface sections of the busbar such that the cable connection portions of said domes are arranged non-parallel to each other. Advantageously, this allows to feed cables that are to be connected to the cable connection portions of said two domes of the connector assembly towards the connector assembly from different directions.

In an embodiment of the connector assembly, the second interface sections of at least two of the domes can be connected to first interface sections of the busbar such that the cable connection portions of said domes are arranged in a common plane. Advantageously this allows for a space-saving arrangement of the cable connection portions of said two domes of the connector assembly. Furthermore this arrangement allows to feed cables that are to be connected to the cable connection portions of said two domes towards the connector assembly in a common plane.

In an embodiment of the connector assembly, a longitudinal axis of the busbar is arranged in parallel to said plane. Advantageously this allows for a particularly space-saving arrangement.

In an embodiment of the connector assembly, the second interface section of at least one of the domes is arranged at a bottom side of the pole portion of said dome. This allows to arrange said dome on the busbar such that the pole portion of said dome is oriented perpendicular to a connection side of the busbar.

In an embodiment of the connector assembly, the second interface section of at least one of the domes is arranged at the lateral side of the pole portion of said dome. This allows to arrange said dome on the busbar such that the pole portion of said dome is oriented in parallel to a connection side of the busbar.

In an embodiment of the connector assembly, the cable connection portion of at least one of the domes is bent. Advantageously, this allows to guide the cable connection portion of said dome around an obstacle, for example around a cable connection portion or another portion of another dome of the connector assembly. Advantageously this supports a particularly space-saving arrangement of the domes of this connector assembly.

In an embodiment of the connector assembly, at least two first interface sections of the busbar are arranged in a common plane. Advantageously this allows to arrange two domes of the connector assembly next to each other such that the second interface sections of said domes are arranged in a common plane.

In an embodiment of the connector assembly, the first interface sections of the busbar are arranged linearly. Advantageously this allows to arrange the domes of the connector assembly linearly next to each other.

In an embodiment of the connector assembly, the busbar is bent. Advantageously this allows to adapt the busbar to a particular structural condition. Furthermore the bend of the busbar allows to connect one dome of the connector assembly to the busbar at an elevated position with respect to another dome of the connector assembly. This may for example allow to arrange the cable connection portion of one dome above the cable connection portion of another dome, resulting in a particularly space-saving arrangement.

In an embodiment of the connector assembly, the pole portion of a first dome of the connector assembly is longer than the pole portion of a second dome of the connector assembly. This allows for example to arrange the cable connection portion of the first dome of the connector assembly above the cable connection portion of the second dome of the connector assembly which results in a particularly space-saving arrangement.

In an embodiment of the connector assembly, the connector assembly comprises an intermediate connector that can be arranged between a first interface section of the busbar and a second interface section of one of the domes. Advantageously this allows to elevate the cable connection portion of said dome with respect to the cable connection portion of another dome of the connector assembly. This allows for example to arrange the cable connection portion of said dome above the cable connection portion of another dome of the connector assembly which results in a particularly space-saving arrangement of the connector assembly.

The invention will now be explained in more detail with reference to the Figures, in which:
Fig. 1 shows a schematic side view of a first connector assembly;
Fig. 2 shows a schematic top view of the first connector assembly;
Fig. 3 shows a schematic sectional side view of a part of the first connector assembly;
Fig. 4 shows a schematic top view of the second connector assembly;
Fig. 5 shows a schematic top view of the third connector assembly;
Fig. 6 shows a schematic top view of a fourth connector assembly;
Fig. 7 shows a schematic side view of a fifth connector assembly;
Fig. 8 shows a schematic side view of a sixth connector assembly;
Fig. 9 shows a schematic top view of a seventh connector assembly;
Fig. 10 shows a schematic sectional view of the seventh connector assembly;
Fig. 11 shows a schematic sectional view of an eighth connector assembly;
Fig. 12 shows a schematic sectional view of a ninth connector assembly; and
Fig. 13 shows a schematic top view of a tenth connector assembly.

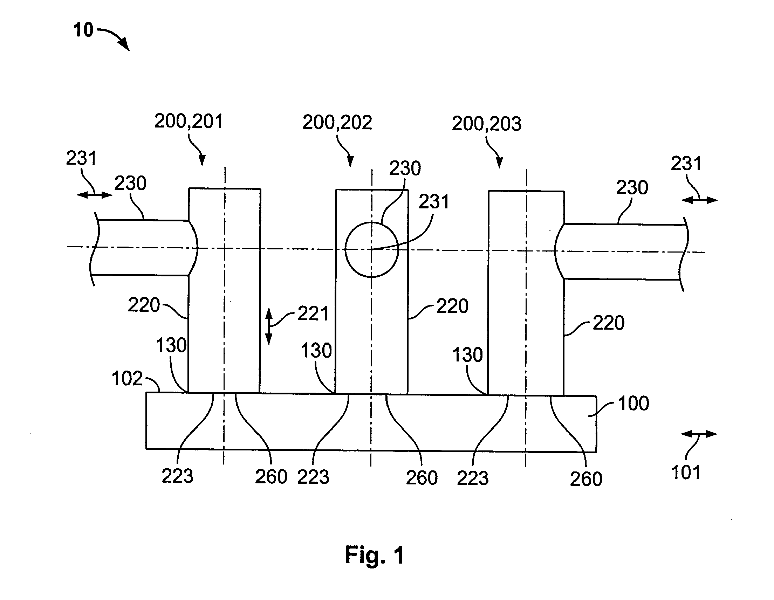

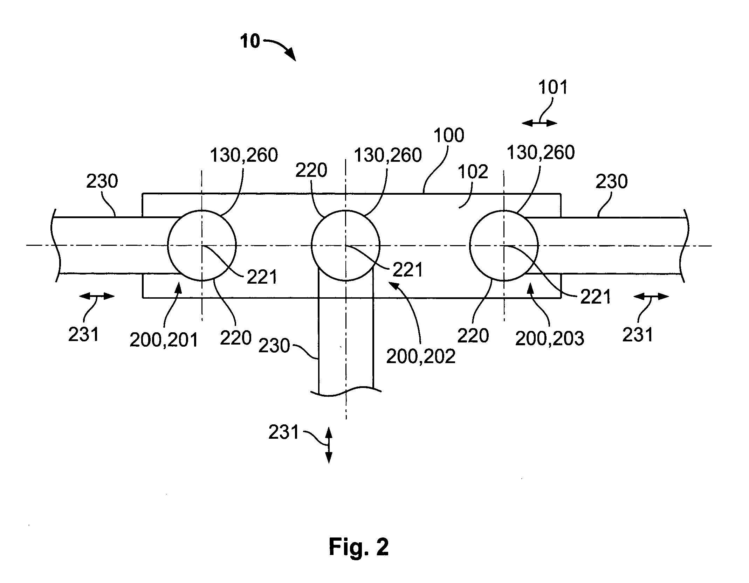

Fig. 1 shows a schematic side view of a first connector assembly 10. Fig. 2 shows a schematic top view of the first connector assembly 10. The first connector assembly 10 may for example be used to connect three medium voltage cables to each other. The first connector assembly 10 may for example be used to connect cables that are designed for voltages between 1 kV and 72 kV. The first connector assembly 10 may however also be used to connect cables designed for voltage classes below 1 kV.

The first connector assembly 10 comprises a busbar 100 and a plurality of domes 200. The domes 200 are provided for being connected to cables. The busbar 100 is provided for providing an electrical connection between the plurality of domes 200 and between the cables connected to the domes 200.

The busbar 100 is approximately bar-shaped and extends along a longitudinal axis 101. On a connection side 102 of the busbar 100, a plurality of first interface sections 130 is provided. In the example shown in Figs. 1 and 2, the busbar 100 comprises three first interface sections 130. The three first interface sections 130 are arranged linearly along the longitudinal axis 101 in a common plane on the connection side 102 of the busbar 100. It is possible to design the busbar 100 with fewer or more than three first interface sections 130.

In the example shown in Figs. 1 and 2 the first connector assembly 10 comprises three domes 200, namely a first dome 201, a second dome 202 and a third dome 203. It is possible to design the first connector assembly 10 with fewer or more than three domes 200. The number of domes 200 should be smaller or equal to the number of first interface sections 130 of the busbar 100 of the first connector assembly 10.

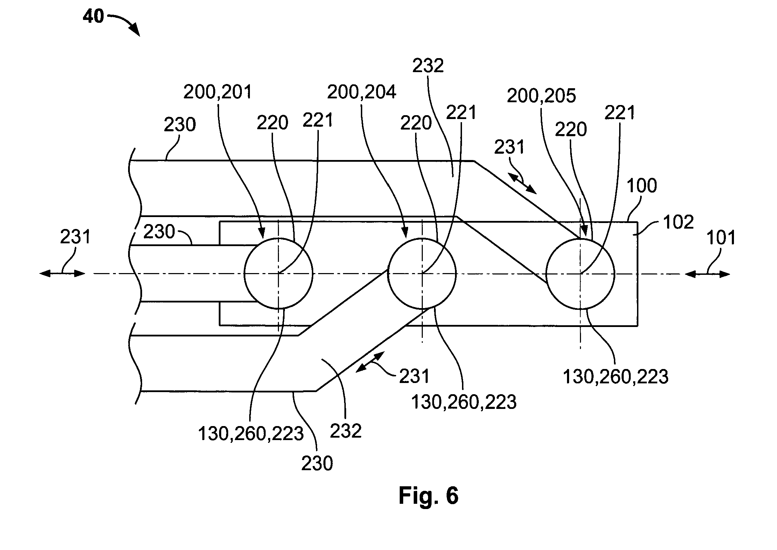

In the example shown in Figs. 1 and 2, the three domes 201, 202, 203 are designed alike to each other. It is however possible to provide the first connector assembly 10 with domes 200 that are different from each other, as will become clear later with reference to e.g. Fig. 6.

Each dome 200 of the first connector assembly 10 comprises a pole portion 220 and a cable connection portion 230. Each pole portion 220 comprises an elongate shape that extends along a longitudinal axis 221 of that pole portion 220. In the example shown in Figs. 1 and 2, the pole portions 220 of the domes 200 of the first connector assembly 10 comprise an approximately cylindrical shape. In the example of the first connector assembly 10 shown in Figs. 1 and 2, the longitudinal axes 221 of the pole portions 220 of the three domes 201, 202, 203 are arranged in parallel to each other. The longitudinal axes 221 of the pole portions 220 of the domes 200 are arranged perpendicular to the longitudinal axis 101 of the busbar 100 and perpendicular to the connection side 102 of the busbar 100.

The cable connection portions 230 of the domes 200 of the first connector assembly 10 each comprise an elongate shape that extends along a longitudinal axis 231 of the cable connection portion 230 of the respective dome 200. In particular, the cable connection portions 230 of the domes 200 comprise an approximately cylindrical shape.

The longitudinal axes 231 of the cable connection portions 230 of the domes 200 each are arranged perpendicular to the longitudinal axis 221 of the pole portion 220 of the respective dome 200. Consequently, the longitudinal axes 231 of the cable connection portions 230 of the domes 200 of the first connector assembly 10 are arranged in a plane that is parallel to the connection side 102 of the busbar 100 of the first connector assembly 10. In other embodiments, the longitudinal axes 231 of the cable connection portions 230 of the domes 200 may however be arranged at angles different from 90° with respect to the longitudinal axis 221 of the pole portion 220 of the respective dome 200.

The longitudinal axis 231 of the cable connection portion 230 of the first dome 201 of the first connector assembly 10 is arranged in parallel to the longitudinal axis 101 of the busbar 100. The longitudinal axis 231 of the cable connection portion 230 of the second dome 202 of the first connector assembly 10 is arranged perpendicular to the longitudinal axis 101 of the busbar 100. The longitudinal axis 231 of the cable connection portion 230 of the third dome 203 of the first connector assembly 10 is arranged in parallel to the longitudinal axis 101 of the busbar 100. The cable connection portion 230 of the third dome 203 extends in the opposite direction than the cable connection portion 230 of the first dome 201 of the first connector assembly 10.

The elongate pole portion 220 of each dome 200 of the first connector assembly 10 comprises a bottom side 223. On the bottom side 223 of the pole portion 220 of each dome 200 a second interface section 260 is arranged. The second interface section 260 of each dome 200 is electrically and mechanically connected to one first interface section 130 of the busbar 100 each. The connection may for example be made by screwing, clamping or soldering.

The domes 200 of the first connector assembly 10 are thus arranged next to each other along the longitudinal axis 101 of the busbar 100. The second dome 202 is arranged between the first dome 201 and the third dome 203. The pole portion 220 of the first dome 201 points away from the second dome 202 and the third dome 203. The pole portion 220 of the third dome 203 points away from the second dome 202 and the first dome 201.

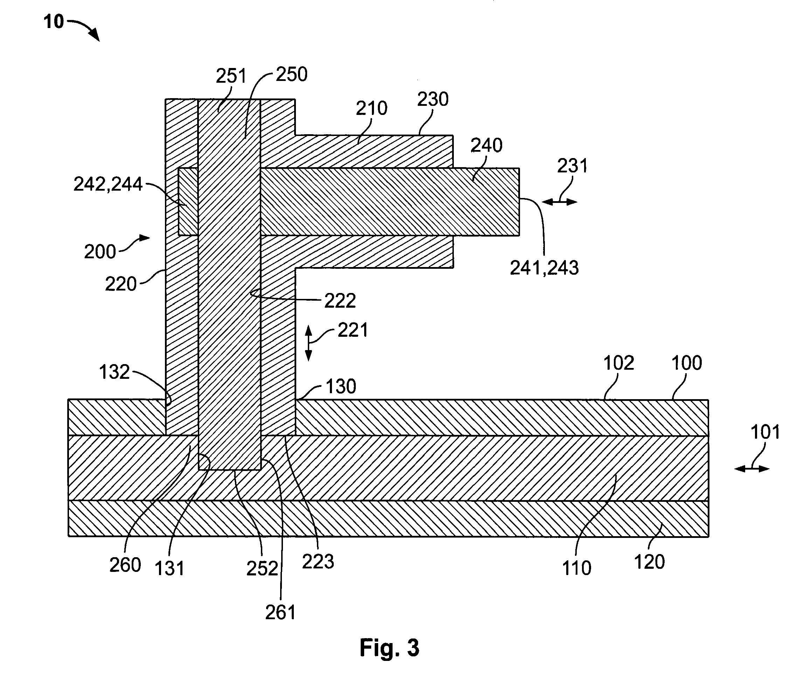

Fig. 3 shows a schematic sliced side view of a part of the busbar 100 of the first connector assembly 10 and one dome 200 of the first connector assembly 10. Fig. 3 illustrates an exemplary internal construction of the busbar 100 and the domes 200 of the first connector assembly 10. The design shown in Fig. 3 is only for illustrative purposes however. The busbar 100 and the domes 200 of the first connector assembly 10 may comprise other and more complex internal constructions.

The busbar 100 of the first connector assembly 10 comprises a conductor 110 that is arranged in a housing 120. The conductor 110 is approximately bar-shaped and comprises an electrically conductive material, for example a metal.

The housing 120 of the busbar 100 comprises an electrically insulating material. The housing 120 may comprise an elastomeric material, for example a silicone or EPDM or TPE.

In the schematic example shown in Fig. 3, each first interface section 130 of the busbar 100 comprises a threaded bore 131 in the conductor 110 and an opening 132 in the housing 120 above the threaded bore 131. The threaded bore 131 of the respective first interface section 130 is accessible at the connection side 102 of the busbar 100 through the respective opening 132 of the housing 120.

The dome 200 comprises a housing 210. The housing 210 comprises an electrically insulating material. The housing 210 of the dome 200 may comprise an elastomeric material, for example a silicone or EPDM or TPE. The housing 210 of the dome 200 may comprise the same material as the housing 120 of the busbar 100. The housing 210 of the dome 200 and the housing 120 of the busbar 100 each may comprise further elements, e.g. Faraday cages or other means for stress grading and outer conductive layers that are a coating or overmolding.

In the pole portion 220 of the dome 200, the housing 210 comprises a plug socket 222 that extends along the longitudinal axis 221 of the pole portion 220 through the pole portion 220. The plug socket 222 may comprise a cylindrical shape, a conical shape or another shape.

In the cable connection portion 230 of the dome 200 a cable terminal 240 is arranged in the housing 210 of the dome 200. The cable terminal 240 comprises an electrically conductive material. The cable terminal 240 may for example comprise a metal.

The cable terminal 240 comprises an outer end 241 and an opposed inner end 242. The inner end 242 of the cable terminal 240 is arranged at the intersection of the cable connection portion 230 and the pole portion 220 of the dome 200 inside the housing 210. The inner end 242 comprises a plug contact section 244 that may for example be designed as a contact ring. The plug contact section 244 of the cable terminal 240 is accessible from the plug socket 222 of the dome 200. If the plug contact section 244 is designed as a contact ring, the plug socket 222 may for example extend through the contact ring.

The outer end 241 of the cable terminal 240 comprises a cable contact section 243 that is accessible at an end of the cable connection portion 230 of the dome 200 that faces away from the pole portion 220 of the dome 200. The cable contact section 243 of the cable terminal 240 is accessible from the outside of the dome 200 and may protrude from the housing 210 of the dome 200. The cable contact section 243 of the cable terminal 240 is designed for being electrically and mechanically connected to a cable, for example using a commonly available cable joint system. The cable contact section 243 may be designed for enabling cable connections of different types such as joints (heatshrink or cold applied) or elbow by providing a bushing-type shape or e.g. an opening to insert cables with or without adapters like known from commonly available elbow systems. A further option is to design the cable contact section 243 to allow for connecting terminations.

The dome 200 further comprises a plug 250. The plug 250 comprises an elongate shape with an outer end 251 and an opposed inner end 252. The shape of the plug 250 matches the shape of the plug socket 222 of the dome 200. The plug 250 comprises an electrically conductive material in at least some parts of the plug 250.

The plug 250 can be arranged in the plug socket 222 of the dome 200 such that the inner end 252 of the plug 250 is oriented towards the busbar 100. The inner end 252 of the plug 250 comprises a threaded boss 261 that protrudes over the housing 210 of the dome 200 at the bottom side 223 of the plug socket 222 of the dome 200 when the plug 250 is arranged in the plug socket 222 of the dome 200 and forms part of the second interface section 260. The threaded boss 261 of the plug 250 can be screwed into the threaded bore 131 of one first interface section 130 of the busbar 100 to provide an electrical and mechanical connection between the conductor 110 of the busbar 100 and the plug 250.

The plug 250 is also electrically connected to the plug contact section 242 of the cable terminal 240 of the dome 200 when the plug 250 is arranged in the plug socket 222 of the dome 200. The plug 250 thus provides an electric connection between the conductor 110 of the busbar 100 and the cable terminal 240 of the dome 200 when the plug 250 is arranged in the plug socket 222 of the dome 200. The busbar 100 thus provides electric connections between the cable terminals 240 of all domes 200 connected to the busbar 100 of the first connector assembly 10 and thus electric connections between all cables connected to the cable terminals 240 of the domes 200 of the first connector assembly 10.

The plug 250 of the dome 200 can be removed from the dome 200 to electrically disconnect the cable terminal 240 of the dome 200 from the conductor 110 of the busbar 100 without movement of the busbar 100, the dome 200 or a cable connected to the cable terminal 250 of the dome 200.

The plug 250 may be composed out of multiple individual parts.

In addition or in alternative to the connection between the threaded boss 261 and the threaded bore 131, the connection between the first interface section 130 of the busbar 100 and the second interface section 260 of the dome 200 may comprise a solder connection, a clamping connection or another connection. The housing 120 of the busbar 100 and the housing 210 of the dome 200 may overlap each other such that the housing 120 of the busbar 100 is partially enclosed by the housing 210 of the dome 200 and/or that the housing 210 of the dome 200 is partially enclosed by the housing 120 of the busbar 100.

The first connector assembly 10 may comprise further plugs that may replace the plug 250 to serve for other purposes like grounding or electric isolation.

In an alternative embodiment of the first connector assembly 10, the plug 250 may be replaced by another element that provides an electric connection between the conductor 110 of the busbar 100 and the cable terminal 240 of the dome 200. This element may not be pluggable but maybe installed permanently in the dome 200. The element may be overmolded or otherwise integrated into the housing 210 of the dome 200 such that the element cannot be removed from the housing 210.

Referring now to Figs. 1 and 2 again, the domes 200 of the first connector assembly 10 may be designed for all being connected to cables of the same construction. The domes 200 of the first connector assembly 10 may however also be designed for being connected to cables of different constructions, for example to cables of different diameters and different cross sections, to cables with different shielding systems, to differently armored cables and to cables designed for different voltage classes.

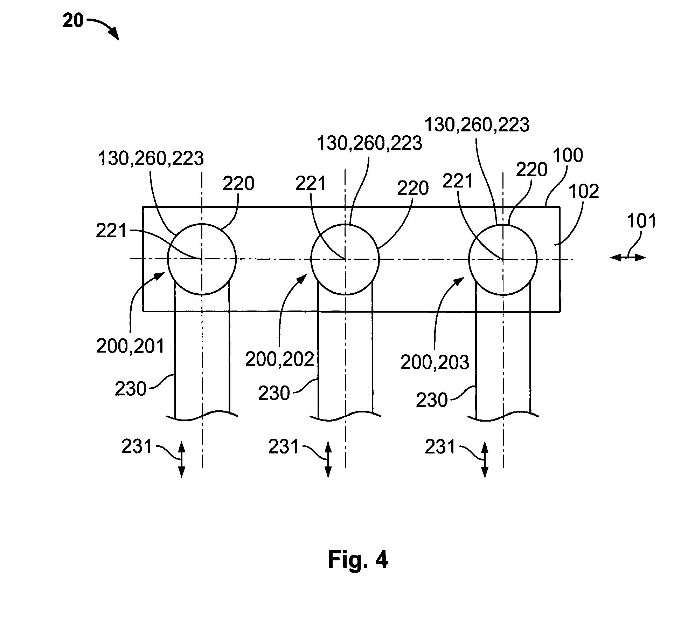

In the following, further connector assemblies will be described with reference to Figs. 4 to 13. The further connector assemblies are similar to the first connector assembly 10. Like components are provided with like reference numbers and will not be explained in detail again. In the following, only the differences between the further connector assemblies and the first connector assembly 10 are described. The features described with reference to Figs. 4 to 13 can be combined with each other in any order.

Fig. 4 shows a schematic top view of a second connector assembly 20. In the second connector assembly 20 all three domes 201, 202, 203 are connected to the busbar 100 such that the cable connection portions 230 of all domes 201, 202, 203 of the second connector assembly 20 are arranged in parallel to each other. The cable connection portions 230 of the domes 200 of the second connector assembly 20 are arranged such that the longitudinal axes 231 of the cable connection portions 230 are arranged perpendicular to the longitudinal axis 101 of the busbar 100.

The cable terminals 240 of all domes 200 of the second connector assembly 20 may be designed for being connected to cables of the same construction. The cable terminals 240 of the domes 200 of the second connector assembly 20 may however also be designed for being connected to cables of different constructions, for example to cables of different diameters and different cross sections, to cables with different shielding systems, to differently armored cables and to cables designed for different voltage classes.

The second interface sections 260 of all domes 200 of the second connector assembly 20 can be connected to first interface sections 130 of the busbar 100 such that the pole portions 220 of said domes 200 are arranged in parallel to each other. The second interface sections 260 of all domes 200 of the second connector assembly 20 can be connected to first interface sections 230 of the busbar 100 such that the pole portions 220 of the domes 200 are arranged perpendicular to the longitudinal axis of the busbar 100.

The pole portions 220 and the cable connection portions 230 of all domes 200 of the second connector assembly 20 are arranged perpendicular to each other. The second interface sections 260 of all domes 200 can be connected to first interface sections 130 of the busbar 100 of the second connector assembly 20 such that the cable connection portions 230 of said domes 200 are arranged in a common plane. The longitudinal axis 101 of the busbar 100 is arranged in parallel to that plane.

The second interface sections 260 of all domes 200 of the second connector assembly 20 are arranged at the bottom side 223 of the pole portion 220 of the respective dome 200. The first interface sections 130 of the busbar 100 of the second connector assembly 20 are arranged in a common plane and linearly along the longitudinal axis 101 of the busbar 100 at the connection side 102 of the busbar 100.

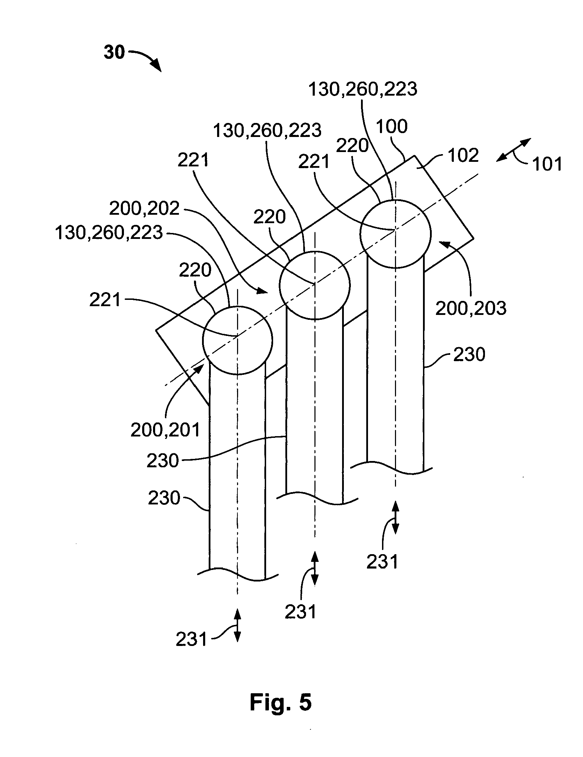

Fig. 5 shows a schematic top view of a third connector assembly 30. In the third connector assembly 30 the three domes 201, 202, 203 are connected to the busbar 100 such that the cable connection portions 230 of the three domes 201, 202, 203 are arranged in parallel to each other. The longitudinal axes 231 of the cable connection portions 230 of the domes 200 of the third connector assembly 30 are however arranged neither in parallel nor perpendicular to the longitudinal axis 101 of the busbar 100. The longitudinal axis 201 of the cable connection portions 230 of the domes 200 of the third connector assembly 30 are arranged at an angle with respect to the longitudinal axis 101 of the busbar 100. The angle comprises a value between 0° and 90°, for example 45°. In consequence, the cable connection portions 230 of the domes 200 of the third connector assembly 30 are arranged closer to each other than the cable connection portions 230 of the domes 200 of the second connector assembly 20 shown in Fig. 4.

The cable terminals 240 of the domes 200 of the third connector assembly 30 may be designed for being connected to cables of the same construction. The cable terminals 240 of the domes 200 of the third connector assembly 30 may however also be designed for being connected to cables of different constructions, for example to cables of different diameters and different cross sections, to cables with different shielding systems, to differently armored cables and to cables designed for different voltage classes.

The second interface sections of all domes 200 of the third connector assembly 30 can be connected to first interface sections 130 of the busbar 100 such that the pole portions 220 of the domes 200 are arranged in parallel to each other. The second interface sections 260 of all domes 200 of the third connector assembly 30 can be connected to first interface sections 130 of the busbar 100 such that the pole portions 220 of the domes 200 are arranged perpendicular to the longitudinal axis 101 of the busbar 100. The pole portions 220 and the cable portions 230 of all domes 200 of the third connector assembly 30 are arranged perpendicular to each other.

The second interface sections of all domes 200 of the third connector assembly 30 can be connected to first interface sections 130 of the busbar 100 such that the cable connection portions 230 of the domes 200 are arranged in a common plane. The longitudinal axis 101 of the busbar 100 is arranged in parallel to that plane.

The second interface section 260 of each dome 200 of the third connector assembly 30 is arranged at the bottom side 223 of the pole portion 220 of the respective dome 200. The first interface sections 130 of the busbar 100 of the third connector assembly 30 are arranged linearly along the longitudinal axis 101 of the busbar and in a common plane on the connection side 102 of the busbar 100.

Fig. 6 shows a schematic top view of a fourth connector assembly 40. The fourth connector assembly 40 comprises three domes 200, namely the first dome 201, a fourth dome 204 and a fifth dome 205. The fourth dome 204 replaces the second dome 202 of the first connector assembly 10. The fifth dome 205 replaces the third dome 203 of the first connector assembly 10.

The cable connection portion 230 of the fourth dome 204 comprises a bend 232 at which the extension direction of the cable connection portion 230 of the fourth dome 204 changes. The bend 232 divides the cable connection portion 230 into two parts. The longitudinal axis 231 of the cable connection portion 230 of the fourth dome 204 is arranged perpendicular to the pole portion 220 of the fourth dome 204 in both parts of the cable connection portion 230. The longitudinal axis 231 of the cable connection portion 230 of the fourth dome 204 however is only parallel to the longitudinal axis 231 of the cable connection portion 230 of the first dome 201 and to the longitudinal axis 101 of the busbar 100 in the outer second part of the cable connection portion 230 of the fourth dome 204. The longitudinal axis 231 of the inner part of the cable connection portion 203 of the fourth dome 204 that is arranged adjacent to the pole portion 220 of the fourth dome 204 is arranged at an angle with respect to the longitudinal axis 101 of the busbar 100. The angle may for example be 45°.

The cable connection portion 230 of the fifth dome 205 also comprises a bend 232. The cable connection portion 230 of the fifth dome 205 is bent in the opposite direction compared to the cable connection portion 230 of the fourth dome 204. The longitudinal axis 231 of the outer part of the cable connection portion 230 of the fifth dome 205 is arranged in parallel to the longitudinal axis 101 of the busbar 100. The longitudinal axis 231 of the inner part of the cable connection portion 230 of the fifth dome 205 is arranged at an angle with respect to the longitudinal axis 101 of the busbar 100.

The bends 232 of the cable connection portions 230 of the fourth dome 204 and the fifth dome 205 of the fourth connector assembly 40 allow to guide the cable connection portion 230 of the fourth dome 204 around the pole portion 220 of the first dome 201 and to guide the cable connection portion 230 of the fifth dome 205 around the pole portion 220 of the fourth dome 204.

The cable terminals 240 of all domes 200 of the fourth connector assembly 40 can be designed for being connected to cables of the same construction. The cable terminals 240 of the domes 200 of the fourth connector assembly 40 may however also be designed for being connected to cables of different constructions, for example to cables of different diameters and different cross sections, to cables with different shielding systems, to differently armored cables and to cables designed for different voltage classes.

The second interface sections 260 of all domes 200 of the fourth connector assembly 40 can be connected to first interface sections 130 of the busbar 100 such that the pole portions 220 of the domes 200 are arranged in parallel to each other. The second interface sections 260 of all domes 200 of the fourth connector assembly 40 can be connected to first interface sections 130 of the busbar 100 such that the pole portions 220 of all domes 200 are arranged perpendicular to the longitudinal axis 101 of the busbar 100. The pole portions 220 and the cable connection portions 230 of all domes 200 of the fourth connector assembly 40 are arranged perpendicular to each other.

The second interface sections 260 of all domes 200 of the fourth connector assembly 40 can be connected to first interface sections 130 of the busbar 100 such that at least parts of the cable connection portions 230 of the domes 200 are arranged in parallel to each other. The second interface sections 260 of the domes 200 can be connected to first interface sections 130 of the busbar 100 of the fourth connector assembly 40 such that parts of the cable connection portions 230 of the domes 200 are arranged non-parallel to each other.

The second interface sections 260 of all domes 200 of the fourth connector assembly 40 can be connected to first interface sections 130 of the busbar 100 such that the cable connection portions 230 of the domes 200 are arranged in a common plane. The longitudinal axis 101 of the busbar 100 is arranged in parallel to that plane.

The second interface sections 260 of each of the domes 200 of the fourth connector assembly 40 is arranged at the bottom side 223 of the pole portion 220 of the respective dome 200. The first interface sections 130 of the busbar 100 of the fourth connector assembly 40 are arranged linearly along the longitudinal axis 101 of the busbar 100 and in a common plane on the connection side 102 of the busbar 100.

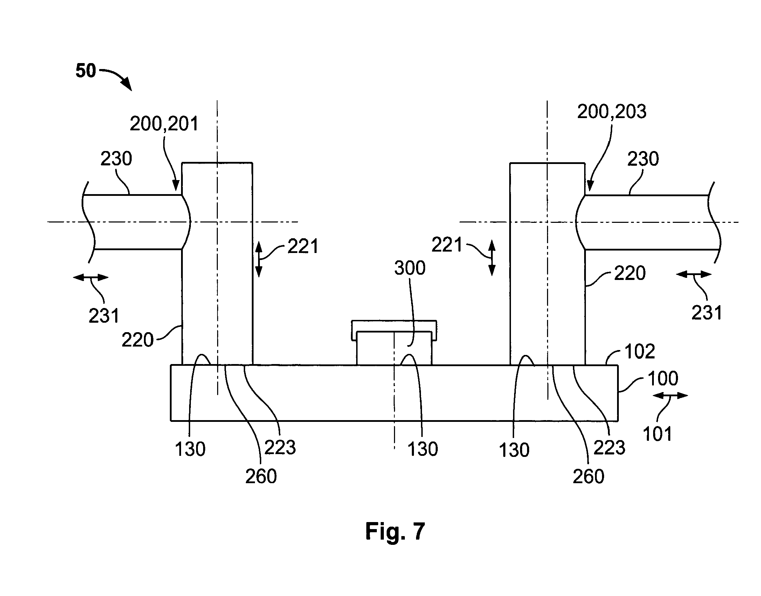

Fig. 7 shows a schematic side view of a fifth connector assembly 50. In contrast to the first connector assembly 10 depicted in Figs. 1 and 2, the fifth connector assembly 50 comprises only two domes 200, namely the first dome 201 and the third dome 203. The busbar 100 of the fifth connector assembly 50 however comprises three first interface sections 130. The first dome 201 and the third dome 203 are each connected to one first interface section 130. A third first interface section 130 of the busbar 100 is not occupied by a dome 200. This unoccupied first interface section 130 of the busbar 100 is located between the first interface sections 130 that are connected to the first dome 201 and the third dome 203 respectively.

A blind plug 300 is connected to the unoccupied first interface section 130 of the busbar 100 that is not connected to a dome 200. The blind plug 300 serves to close the opening 132 of the housing 120 of the busbar 100 of the unoccupied first interface section 130 to prevent an accidental contact to the conductor 110 of the busbar 100 and to prevent dirt and humidity from entering into the unoccupied first interface section 130. Furthermore the blind plug 300 electrically closes the unoccupied first interface section 130 of the busbar 100.

The fifth connector assembly 50 may be used to electrically connect two cables that are connected to the cable connection portions 230 of the first dome 201 and the third dome 203. A further dome 200 connected to a further cable may later be connected to the unoccupied first interface section 130 of the busbar 100 of the fifth connector assembly 50 to electrically connect the further cable to the two cables connected to the first dome 201 and the third dome 203.

The domes 200 of the fifth connector assembly 50 may be designed for being connected to cables of the same construction. The domes 200 of the fifth connector assembly 50 may however also be designed for being connected to cables of different constructions, for example to cables of different diameters and different cross sections, to cables with different shielding systems, to differently armored cables and to cables designed for different voltage classes.

The second interface sections 260 of the two domes 200 of the fifth connector assembly 50 can be connected to first interface section 130 of the busbar 100 of the first connector assembly 10 such that the pole portions 220 of the domes 200 of the fifth connector assembly 50 are arranged in parallel to each other. The second interface sections 260 of the domes 200 can be connected to first interface sections 130 of the busbar 100 such that the pole portions 220 of the domes 200 of the fifth connector assembly 50 are arranged perpendicular to the longitudinal axis 101 of the busbar 100. The pole portion 220 of each of the domes 200 of the fifth connector assembly 50 is arranged perpendicular to the cable connection portion 230 of the respective dome 200.

The second interface sections of the first dome 201 and the third dome 203 of the fifth connector assembly 50 can be connected to first interface sections 130 of the busbar 100 such that the cable connection portions 230 of said two domes 201, 203 are arranged in parallel to each other. Furthermore, the second interface sections 260 of the domes 200 of the fifth connector assembly 50 can be connected to first interface sections 130 of the busbar 100 such that the cable connection portions 230 of all domes 200 of the fifth connector assembly 50 are arranged in a common plane. The longitudinal axis 101 of the busbar 100 is arranged in parallel to that plane.

The second interface sections 260 of the domes 200 of the fifth connector assembly 50 are arranged at the bottom side 223 of the pole portions 220 of the domes 200. The first interface sections 130 of the busbar 100 of the fifth connector assembly 50 are arranged in a common plane at the connection side 102 of the busbar 100. The first interface sections 130 of the busbar 100 are arranged linearly along the longitudinal axis 101 of the busbar 100.

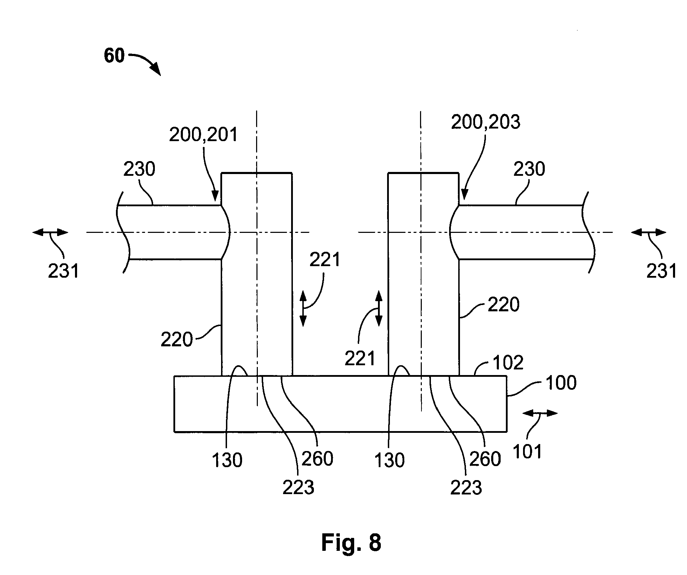

Fig. 8 shows a schematic side view of a sixth connector assembly 60. In contrast to the first connector assembly 10 shown in Figs. 1 and 2, the sixth connector assembly 60 comprises only two domes 200, namely the first dome 201 and the third dome 203. The busbar 100 of the sixth connector assembly 60 comprises only two first interface sections 130. The two domes 201, 203 of the sixth connector assembly 60 are connected to the two first interface sections 130 of the busbar 100. The two first interface sections 130 of the busbar 100 are arranged linearly along the longitudinal axis 101 of the busbar 100 in a common plane on the connection side 102 of the busbar 100.

The sixth connector assembly 60 can be used to establish an electric connection between two cables that are connected to the two domes 201, 203 of the sixth connector assembly 60.

The domes 200 of the sixth connector assembly 60 may be designed for being connected to cables of the same construction. The domes 200 of the sixth connector assembly 60 may however also be designed for being connected to cables of different constructions, for example to cables of different diameters and different cross sections, to cables with different shielding systems, to differently armored cables and to cables designed for different voltage classes.

The second interface sections 260 of the two domes 200 of the sixth connector assembly 60 can be connected to first interface section 130 of the busbar 100 of the first connector assembly 10 such that the pole portions 220 of the domes 200 of the sixth connector assembly 60 are arranged in parallel to each other. The second interface sections 260 of the domes 200 can be connected to first interface sections 130 of the busbar 100 such that the pole portions 220 of the domes 200 of the sixth connector assembly 60 are arranged perpendicular to the longitudinal axis 101 of the busbar 100. The pole portion 220 of each of the domes 200 of the sixth connector assembly 60 is arranged perpendicular to the cable connection portion 230 of the respective dome 200.

The second interface sections of the first dome 201 and the third dome 203 of the sixth connector assembly 60 can be connected to first interface sections 130 of the busbar 100 such that the cable connection portions 230 of said two domes 201, 203 are arranged in parallel to each other. Furthermore, the second interface sections 260 of the domes 200 of the sixth connector assembly 60 can be connected to first interface sections 130 of the busbar 100 such that the cable connection portions 230 of all domes 200 of the sixth connector assembly 60 are arranged in a common plane. The longitudinal axis 101 of the busbar 100 is arranged in parallel to that plane.

The second interface sections 260 of the domes 200 of the sixth connector assembly 60 are arranged at the bottom side 223 of the pole portions 220 of the domes 200. The first interface sections 130 of the busbar 100 of the sixth connector assembly 60 are arranged in a common plane at the connection side 102 of the busbar 100. The first interface sections 130 of the busbar 100 are arranged linearly along the longitudinal axis 101 of the busbar 100.

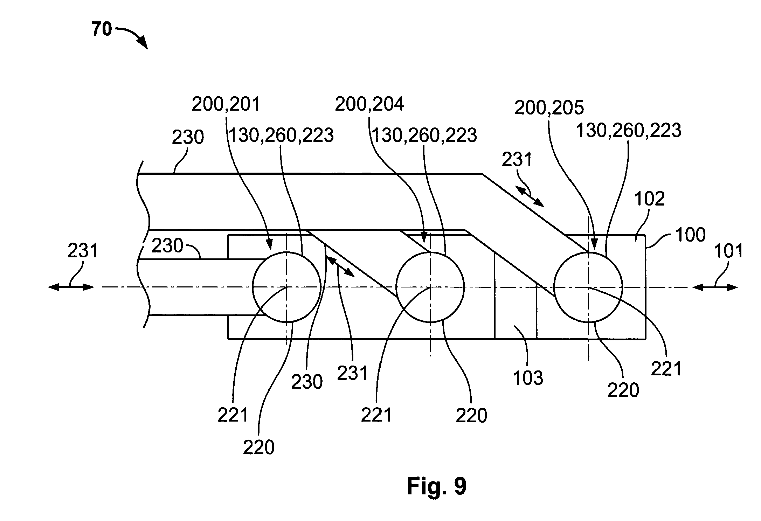

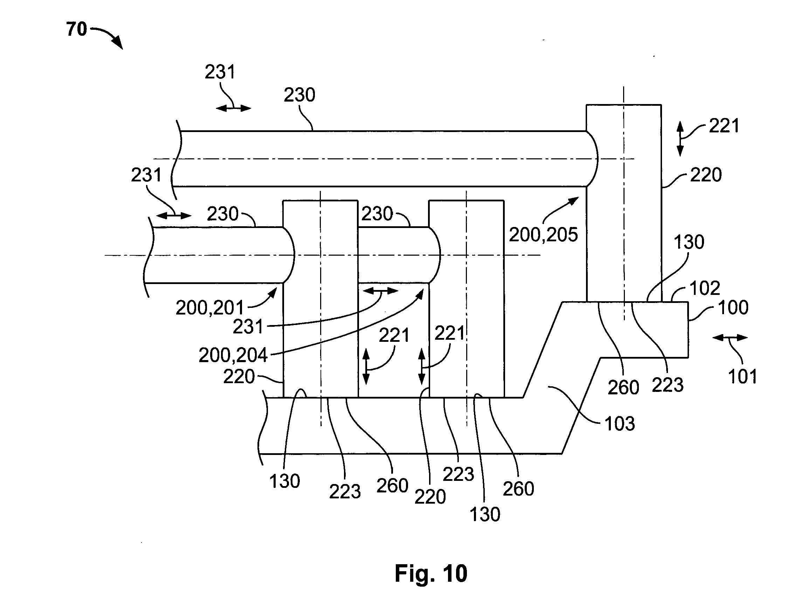

Fig. 9 shows a schematic top view of a seventh connector assembly 70. Fig. 10 shows a schematic side view of the seventh connector assembly 70. The seventh connector assembly 70 is similar to the fourth connector assembly 40 of Fig. 6 and comprises the first dome 201, the fourth dome 204 and the fifth dome 205. The cable connection portion 230 of the fourth dome 204 of the seventh connector assembly 70 is however bent in the opposite direction compared to the fourth dome 204 of the fourth connector assembly 40.

In contrast to the fourth connector assembly 40 of Fig. 6, the busbar 100 of the seventh connector assembly 70 comprises a bend 103. In the area of the bend 103 the busbar 100 is bent in a direction perpendicular to the longitudinal axis 101 and perpendicular to the connection side 102. In consequence, one of the three first interface sections 130 of the busbar 100 is elevated with respect to the other two first interface sections 130 of the busbar 100. The first interface sections 130 of the busbar 100 are arranged linearly along the longitudinal axis 101 of the busbar 100 but are not arranged in a common plane.

The fifth dome 205 is connected to the elevated first interface section 130 of the busbar 100 of the seventh connector assembly 70. Since the elevated first interface section 130 of the busbar 100 of the seventh connector assembly 70 is elevated in the direction of the longitudinal axis 221 of the pole portion 220 of the fifth dome 205, the cable connection portion 230 of the fifth dome 205 is elevated above the cable connection portions 230 of the first dome 201 and the fourth dome 204 in a direction parallel to the direction of the longitudinal axes 221 of the pole portions 220 of the dome 201, 204, 205 of the seventh connector assembly 70. The cable connection portions 230 of the first dome 201 and the fourth dome 204 of the seventh connector assembly 70 are arranged in a common plane. The longitudinal axis 101 of the busbar 100 is arranged in parallel to that plane.

The outer part of the cable connection portion 230 of the fourth dome 204 is arranged below the outer part of the cable connection portion 230 of the fifth dome 205, which results in a particularly space-saving arrangement.

The cable terminals 240 of all domes 200 of the seventh connector assembly 70 can be designed for being connected to cables of the same construction. The cable terminals 240 of the domes 200 of the seventh connector assembly 70 may however also be designed for being connected to cables of different constructions, for example to cables of different diameters and different cross sections, to cables with different shielding systems, to differently armored cables and to cables designed for different voltage classes.

The second interface sections 260 of all domes 200 of the seventh connector assembly 70 can be connected to first interface sections 130 of the busbar 100 such that the pole portions 220 of the domes 200 are arranged in parallel to each other. The second interface sections 260 of all domes 200 of the seventh connector assembly 70 can be connected to first interface sections 130 of the busbar 100 such that the pole portions 220 of all domes 200 are arranged perpendicular to the longitudinal axis 101 of the busbar 100. The pole portions 220 and the cable connection portions 230 of all domes 200 of the seventh connector assembly 70 are arranged perpendicular to each other.

The second interface sections 260 of all domes 200 of the seventh connector assembly 70 are arranged at the bottom side 223 of the pole portions 220 of the domes 200.

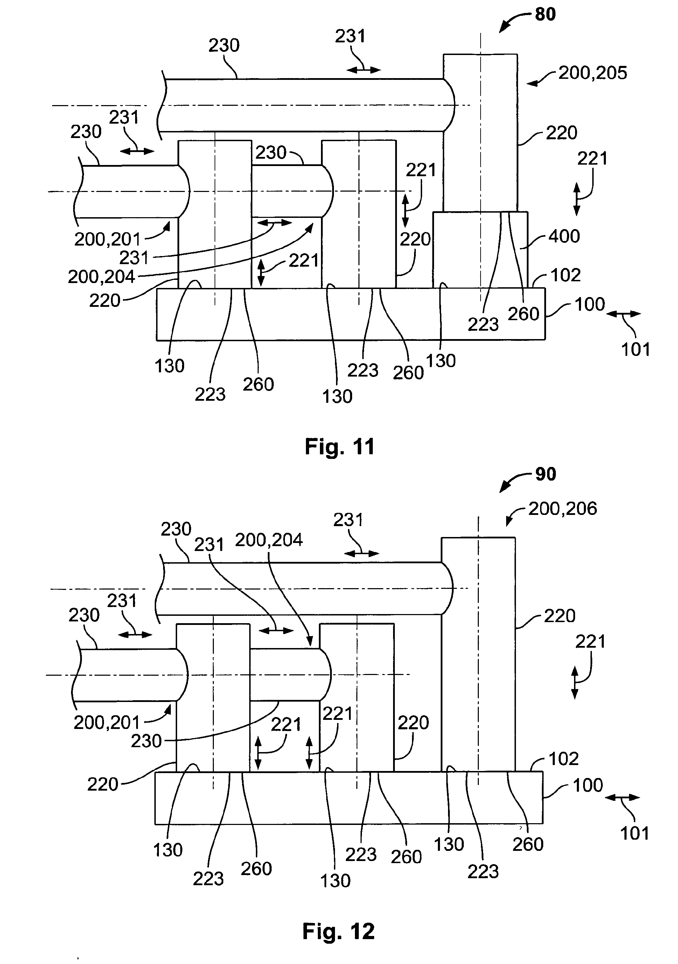

Fig. 11 shows a schematic side view of an eighth connector assembly 80. The eighth connector assembly 80 is similar to the fourth connector assembly 40 of Fig. 6. The cable connection portion 230 of the fourth dome 204 of the eighth connector assembly 80 is however bent in the opposite direction compared to the fourth dome 204 of the fourth connector assembly 40.

In contrast to the fourth connector assembly 40 of Fig. 6, the eighth connector assembly 80 comprises an intermediate connector 400 that is arranged between the second interface section 260 of the fifth dome 205 at the bottom side 223 of the pole portion 220 of the fifth dome 205 and one of the first interface sections 130 of the busbar 100. The intermediate connector 400 provides an electrical and mechanical connection between the second interface section 260 of the fifth dome 205 and the first interface section 130 of the busbar 100.

Due to the presence of the intermediate connector 400, the fifth dome 205 is elevated in a direction parallel to the longitudinal axis 221 of the pole portion 220 of the fifth dome 205 with respect to the first dome 201 and the fourth dome 204 of the eighth connector assembly 80. Consequently, the cable connection portion 230 of the fifth dome 205 is not arranged in a common plane with the cable connection portions 230 of the first dome 201 and the fourth dome 204 but is elevated above the cable connection portions 230 of the first dome 201 and the fourth dome 204 in a direction parallel to the longitudinal axes 221 of the pole portions 220 of the domes 200 of the eighth connector assembly 80. The cable connection portions 230 of the first dome 201 and the fourth dome 204 are arranged in a common plane. The longitudinal axis 101 of the busbar 100 is arranged in parallel to that plane.

The cable terminals 240 of all domes 200 of the eighth connector assembly 80 can be designed for being connected to cables of the same construction. The cable terminals 240 of the domes 200 of the eighth connector assembly 80 may however also be designed for being connected to cables of different constructions, for example to cables of different diameters and different cross sections, to cables with different shielding systems, to differently armored cables and to cables designed for different voltage classes.

The second interface sections 260 of all domes 200 of the eighth connector assembly 80 can be connected to first interface sections 130 of the busbar 100 such that the pole portions 220 of the domes 200 are arranged in parallel to each other. The second interface sections 260 of all domes 200 of the eighth connector assembly 80 can be connected to first interface sections 130 of the busbar 100 such that the pole portions 220 of all domes 200 are arranged perpendicular to the longitudinal axis 101 of the busbar 100. The pole portions 220 and the cable connection portions 230 of all domes 200 of the eighth connector assembly 80 are arranged perpendicular to each other.

The second interface sections 260 of all domes 200 of the eighth connector assembly 80 are arranged at the bottom side 223 of the pole portions 220 of the domes 200. The first interface sections 130 of the busbar 100 are arranged linearly along the longitudinal axis 101 of the busbar 100 and in a common plane on the connection side 102 of the busbar 100.

Fig. 12 shows a schematic side view of a ninth connector assembly 90. The ninth connector assembly 90 is similar to the fourth connector assembly 40 of Fig. 6. The cable connection portion 230 of the fourth dome 204 of the ninth connector assembly 90 is however bent in the opposite direction compared to the fourth dome 204 of the fourth connector assembly 40. In contrast to the fourth connector assembly 40 the ninth connector assembly 90 furthermore comprises a sixth dome 206 that replaces the fifth dome 205.

The sixth dome 206 comprises a pole portion 220 that is longer in the direction of the longitudinal axis 221 of the pole portion 220 of the sixth dome 206 than the pole portions 220 of the first dome 201 and the fourth dome 204 of the ninth connector assembly 90. As a result, the cable connection portion 230 of the sixth dome 206 is not arranged in a common plane with the cable connection portions 230 of the first dome 201 and the fourth dome 204 but is elevated above the cable connection portions 230 of the first dome 201 and the fourth dome 204 in a direction parallel to the longitudinal axis 221 of the pole portion 220 of the sixth dome 206. The cable connection portions 230 of the first dome 201 and the fourth dome 204 of the ninth connector assembly 90 are arranged in a common plane. The longitudinal axis 101 of the busbar 100 is arranged in parallel to that plane.

The cable terminals 240 of all domes 200 of the ninth connector assembly 90 can be designed for being connected to cables of the same construction. The cable terminals 240 of the domes 200 of the ninth connector assembly 90 may however also be designed for being connected to cables of different constructions, for example to cables of different diameters and different cross sections, to cables with different shielding systems, to differently armored cables and to cables designed for different voltage classes.

The second interface sections 260 of all domes 200 of the ninth connector assembly 90 can be connected to first interface sections 130 of the busbar 100 such that the pole portions 220 of the domes 200 are arranged in parallel to each other. The second interface sections 260 of all domes 200 of the ninth connector assembly 90 can be connected to first interface sections 130 of the busbar 100 such that the pole portions 220 of all domes 200 are arranged perpendicular to the longitudinal axis 101 of the busbar 100. The pole portions 220 and the cable connection portions 230 of all domes 200 of the ninth connector assembly 90 are arranged perpendicular to each other.

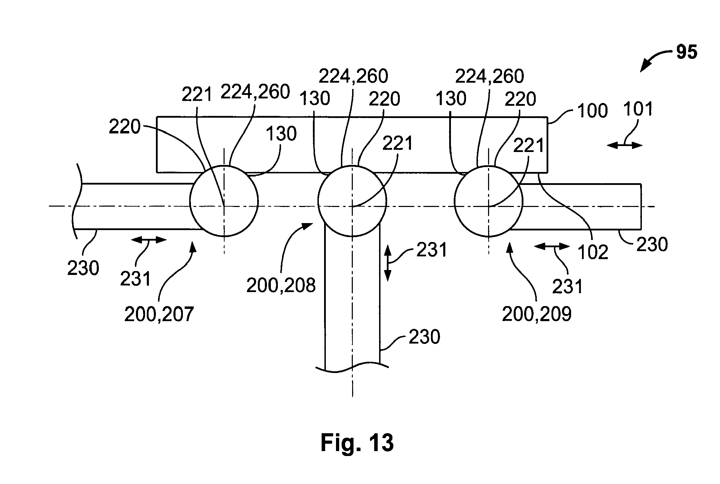

The second interface sections 260 of all domes 200 of the ninth connector assembly 90 are arranged at the bottom side 223 of the pole portions 220 of the domes 200. The first interface sections 130 of the busbar 100 are arranged linearly along the longitudinal axis 101 of the busbar 100 and in a common plane on the connection side 102 of the busbar 100. Fig. 13 shows a schematic top view of a tenth connector assembly 95. The tenth connector assembly 95 comprises a seventh dome 207, an eighth dome 208 and a ninth dome 209. Each of the domes 207, 208, 209 comprises a pole portion 220 and a cable connection portion 230 arranged perpendicular to the respective pole portion 220. The pole portion 220 of each dome 207, 208, 209 comprises a second interface section 260 arranged on a lateral side 224 of the respective pole portion 220.

The busbar 100 comprises three first interface sections 130 arranged linearly along the longitudinal axis 101 of the busbar 100 and in a common plane on the connection side 102 of the busbar 100. The second interface sections 260 of the domes 207, 208, 209 are connected to the first interface sections 130 of the busbar 100 such that the longitudinal axes 221 of the pole portions 220 are arranged perpendicular to the longitudinal axis 101 of the busbar 100 and in parallel to the connection side 102 of the busbar 100. The pole portions of all domes 207, 208, 209 of the tenth connector assembly 95 are arranged in parallel to each other.

The second interface sections 260 of the seventh dome 207 and the ninth dome 209 of the tenth connector assembly 95 are connected to first interface sections 230 of the busbar 100 of the tenth connector assembly 95 such that the cable connection portions 230 of the seventh dome 207 and the ninth dome 209 are arranged in parallel to each other but extend in opposite directions. The second interface sections 260 of the seventh dome 207 and the eighth dome 208 of the tenth connector assembly 95 are connected to first interface sections 130 of the busbar 100 of the tenth connector assembly 95 such that the cable connection portions 230 of the seventh dome 207 and the eighth dome 208 are arranged non-parallel to each other, in particular perpendicular to each other.

The cable connection portions 230 of the seventh dome 207 and the ninth dome 209 are arranged in a common plane. The longitudinal axis 101 of the busbar 100 of the tenth connector assembly 95 is arranged in parallel to that plane.

The cable terminals 240 of all domes 200 of the tenth connector assembly 95 can be designed for being connected to cables of the same construction. The cable terminals 240 of the domes 200 of the tenth connector assembly 95 may however also be designed for being connected to cables of different constructions, for example to cables of different diameters and different cross sections, to cables with different shielding systems, to differently armored cables and to cables designed for different voltage classes.

In further embodiments not depicted in the Figures, the busbar 100 may be bent or manufactured by e.g. milling such that at least two of its first interface sections 130 are not arranged in a common plane but are arranged at an angle with respect to each other. The pole portions 220 of domes 200 connected to these first interface sections 130 are then not arranged in parallel to each other.

In further embodiments not depicted in the Figures, at least three first interface sections 130 of the busbar 100 are arranged in a common plane but not linearly. The first interface sections 130 may for example be arranged at the corners of a triangle.

In further embodiments not depicted in the Figures, the busbar 100 may have a varying cross section along its length. The cross section of the busbar 100 may be different from a simple rectangular shape. The busbar 100 may have a complex three-dimensional shape.

### Reference symbols

- 10: first connector assembly
- 20: second connector assembly
- 30: third connector assembly
- 40: fourth connector assembly
- 50: fifth connector assembly
- 60: sixth connector assembly
- 70: seventh connector assembly
- 80: eighth connector assembly
- 90: ninth connector assembly
- 95: tenth connector assembly

- 100: busbar
- 101: longitudinal axis
- 102: connection side
- 103: bend
- 110: conductor
- 120: housing
- 130: first interface section
- 131: threaded bore
- 132: opening (housing)

- 200: dome
- 201: first dome
- 202: second dome
- 203: third dome
- 204: fourth dome
- 205: fifth dome
- 206: sixth dome
- 207: seventh dome
- 208: eighth dome
- 209: ninth dome

- 210: housing
- 220: pole portion
- 221: longitudinal axis
- 222: plug socket
- 223: bottom side
- 224: lateral side
- 230: cable connection portion
- 231: longitudinal axis
- 232: bend

- 240: cable terminal
- 241: outer end
- 242: inner end
- 243: cable contact section
- 244: plug contact section (contact ring)

- 250: plug
- 251: outer end
- 252: inner end

- 260: second interface section
- 261: threaded boss

- 300: blind plug

- 400: intermediate connector

## Claims

1. A connector assembly (10, 20, 30, 40, 50, 60, 70, 80, 90, 95)
comprising a busbar (100) and a plurality of domes (200),
wherein the busbar (100) comprises a plurality of first interface sections (130),
wherein each dome (200) comprises a pole portion (220) and a cable connection portion (230),
wherein the pole portion (220) of each dome (200) comprises a second interface section (260),
wherein the second interface section (260) of each dome (200) can be connected to one first interface section (130) of the busbar (100).

2. The connector assembly (10, 20, 30, 40, 50, 60, 70, 80, 90, 95) according to claim 1,
wherein the cable connection portion (230) of each dome (200) comprises a cable terminal (240) designed for being connected to a cable,
wherein the busbar (100) comprises a conductor (110), wherein each dome (200) comprises an element (250) provided to electrically connect the cable terminal (240) of said dome (200) with the conductor (110).

3. The connector assembly (10, 20, 30, 40, 50, 60, 70, 80, 90, 95) according to claim 2,
wherein the element (250) of each dome (200) is a plug (250) that can be arranged in the pole portion (220) of said dome (200) to electrically connect the cable terminal (240) of said dome (200) with the conductor (110).

4. The connector assembly (10, 20, 30, 40, 50, 60, 70, 80, 90, 95) according to one of claims 2 and 3,
wherein the cable terminal (240) of a first dome (200) of the connector assembly (10, 20, 30, 40, 50, 60, 70, 80, 90, 95) and the cable terminal (240) of a second dome (200) of the connector assembly (10, 20, 30, 40, 50, 60, 70, 80, 90, 95) are designed for being connected to cables of the same or a different construction.

5. The connector assembly (10, 20, 30, 40, 50, 60, 70, 80, 90, 95) according to one of the preceeding claims,
wherein the second interface sections (260) of at least two of the domes (200) can be connected to first interface sections (130) of the busbar (100) such that the pole portions (220) of said domes (200) are arranged in parallel to each other.

6. The connector assembly (10, 20, 30, 40, 50, 60, 70, 80, 90, 95) according to one of the preceeding claims,
wherein the second interface section (260) of at least one of the domes (200) can be connected to a first interface section (130) of the busbar (100) such that the pole portion (220) of said dome (200) is arranged perpendicular to a longitudinal axis (101) of the busbar (100).

7. The connector assembly (10, 20, 30, 40, 50, 60, 70, 80, 90, 95) according to one of the preceeding claims,
wherein the pole portion (220) and the cable connection portion (230) of at least one of the domes (200) are arranged perpendicular to each other.

8. The connector assembly (10, 20, 30, 40, 50, 60, 70, 80, 90, 95) according to one of the preceeding claims,
wherein the second interface sections (260) of at least two of the domes (200) can be connected to first interface sections (130) of the busbar (100) such that the cable connection portions (230) of said domes (200) are arranged in parallel to each other.

9. The connector assembly (10, 40, 70, 80, 90, 95) according to one of the preceeding claims,
wherein the second interface sections (260) of at least two of the domes (200) can be connected to first interface sections (130) of the busbar (100) such that the cable connection portions (230) of said domes (200) are arranged non-parallel to each other.

10. The connector assembly (10, 20, 30, 40, 50, 60, 70, 80, 90, 95) according to one of the preceeding claims,
wherein the second interface sections (260) of at least two of the domes (200) can be connected to first interface sections (130) of the busbar (100) such that the cable connection portions (230) of said domes (200) are arranged in a common plane.

11. The connector assembly (10, 20, 30, 40, 50, 60, 70, 80, 90, 95) according to claim 10,
wherein a longitudinal axis (101) of the busbar (100) is arranged in parallel to said plane.

12. The connector assembly (10, 20, 30, 40, 50, 60, 70, 80, 90) according to one of the preceeding claims,
wherein the second interface section (260) of at least one of the domes (200) is arranged at a bottom side (223) of the pole portion (220) of said dome (200).

13. The connector assembly (95) according to one of the preceeding claims,
wherein the second interface section (260) of at least one of the domes (200) is arranged at a lateral side (224) of the pole portion (220) of said dome (200).

14. The connector assembly (40, 70, 80, 90) according to one of the preceeding claims,
wherein the cable connection portion (230) of at least one of the domes (200) is bent.

15. The connector assembly (10, 20, 30, 40, 50, 60, 70, 80, 90, 95) according to one of the preceeding claims,
wherein at least two first interface sections (130) of the busbar (100) are arranged in a common plane.

16. The connector assembly (10, 20, 30, 40, 50, 60, 80, 90, 95) according to one of the preceeding claims,
wherein the first interface sections (130) of the busbar (100) are arranged linearly.

17. The connector assembly (70) according to one of the preceeding claims,
wherein the busbar (100) is bent.

18. The connector assembly (90) according to one of the preceeding claims,
wherein the pole portion (220) of a first dome (200) of the connector assembly (90) is longer than the pole portion (220) of a second dome (200) of the connector assembly (90).

19. The connector assembly (80) according to one of the preceeding claims,
wherein the connector assembly (80) comprises an intermediate connector (400) that can be arranged between a first interface section (130) of the busbar (100) and a second interface section (260) of one of the domes (200).
